# EUROPEAN PATENT SPECIFICATION

(11) **EP 3 943 420 B1**
(45) Date of publication and mention of the grant of the patent: **13.08.2025**
(21) Application number: 19913042.8
(22) Date of filing: 24.12.2019
(51) Int. Cl.: B07C 5/36, B65G 1/137, B65G 61/00

(54) **PRODUCT PICK-UP SYSTEM AND PRODUCT PICK-UP METHOD**
PRODUKTAUFNAHMESYSTEM UND PRODUKTAUFNAHMEVERFAHREN
SYSTÈME DE SAISIE DE PRODUIT ET PROCÉDÉ DE SAISIE DE PRODUIT

(30) Priority: 29.01.2019 CN 201910087512
(43) Date of publication of application: 26.01.2022
(73) Proprietor: Beijing Geekplus Technology Co., Ltd., Beijing 100102 (CN)
(72) Inventor: DU, Haijian, Beijing 100102 (CN)
(74) Representative: Dennemeyer & Associates S.A.
(86) International application number: PCT/CN2019/128043
(87) International publication number: WO 2020/155944

(56) References cited:
- WO-A1-2018/193710
- CN-A- 104 843 494
- CN-A- 107 813 134
- CN-A- 108 107 862
- CN-A- 109 607 088
- JP-A- 2018 145 004
- JP-A- H 082 659
- US-A1- 2017 043 953
- US-A1- 2017 106 532
- US-A1- 2018 194 556
- US-A1- 2018 282 079

## Description

The present application claims priority to Chinese Patent Application No. 201910087512.9 filed with SIPO on January 29 2019.

### FIELD OF THE TECHNOLOGY

The present application relates to the technical field of warehousing and logistics, for example, relates to a system and a method for goods picking.

### BACKGROUND OF THE DISCLOSURE

The rapid development of E-commerce has not only brought unprecedented development opportunities to the warehousing and logistics industry, but also posed severe challenges to warehousing and logistics services. How to carry out package picking in an efficient, low-cost, flexible and accurate way has always been a problem faced by the warehousing and logistics industry.

The traditional person-to-goods picking mainly faces problems such as low efficiency, high error rate, high labor intensity, difficulty in recruiting, and difficulty in management. The vigorous development of robotics in recent years has brought huge technological changes to the entire logistics industry, as well as new technologies and design concepts for package picking. The goods-to-person picking of picking device uses a robot to move shelves to worker stations, and then goods on the shelves are taken out and put into order boxes by staff. This manner greatly improves the efficiency in goods picking, greatly reduces labor costs, reduces labor intensity and improves accuracy.

However, in the above-mentioned goods-to-person picking of the picking device, the steps from the shelves to the order boxes are still performed by people, and there is a greater room for improvement in efficiency, labor cost, and accuracy. To solve the above problems, more efficient, automatic and accurate solutions are needed.

### SUMMARY

The invention provides a goods picking system according to claim 1 to improve the efficiency of goods picking and improve the automation and accuracy of picking. Further optional features of the goods picking system are claimed in dependent claims 2 to 8.

The invention further provides a goods picking method according to claim 9 to improve the automation of goods picking and improve the efficiency and accuracy of goods picking.

Further optional features of the goods picking method are claimed in dependent claim 10.

A goods picking system according to the preamble of claim 1 and a method according to the preamble of claim 9 are known from JP 2018 145004 A.

The present disclosure provides the following technical solutions.

A goods picking system includes:
a transmission device including a first transport line and a second transport line, where the first transport line and the second transport line are arranged in parallel;
a transferring system configured to transfer a target container with order goods stored therein from a container storage area to the first transport line, and transfer the target container from the second transport line to the container storage area; and
a picking device arranged at a first end of the first transport line, where the picking device is configured to pick the order goods from the target container according to order information.

In an example, the transferring system includes a transferring device and a fetching device,
the transferring device is configured to transfer a container carrier accommodating the target container between the container storage area and a position where the fetching device is located; and
the fetching device is arranged at a second end of the first transport line, and is configured to fetch the target container from the container carrier and place the target container onto the first transport line, and fetch the target container from the second transport line and place the target container onto the container carrier.

In an example, the transferring system includes:
a transferring device configured to transfer a container carrier accommodating the target container between the container storage area and a first position; and
a fetching device arranged at the first position, where the fetching device is configured to fetch the target container from the container carrier, transfer and place the target container onto the first transport line, fetch the target container from the second transport line, transfer and place the target container on the container carrier.

In an example, the transferring system includes:
a transferring device configured to transfer the target container from the container storage area and place the target container onto the first transport line, and fetch the target container from the second transport line, and transfer and place the target container back to the container storage area.

In an example, the first transport line is arranged above the second transport line, and a lifting platform is provided at same ends of the first transport line and the second transport line.

In an example, the lifting platform is provided with a third transport line, the third transport line is configured to realize transport of the target container from the first transport line to the second transport line through the third transport line on the lifting platform.

In an example, the goods picking system further includes:
an image capture device configured to collect information of goods in the target container, where the information of goods includes posture information of the order goods and quantity information of the order goods and/or product information of the order goods.

In an example, the fetching device at least includes a self-driven device, a mechanical arm and a gripper, the mechanical arm is connected with the self-driven device, and the gripper is arranged at a tail end of the mechanical arm.

In an example, the gripper includes two gripping arms arranged oppositely, and the two gripping arms are configured to clamp the target container for transferring.

In an example, at least one of the gripping arms is provided with a sensor configured for detecting whether the target container is present at the gripping arm.

In an example, a width of the target container increases from bottom to top, and a distance between the two gripping arms is greater than a minimum width of the target container and is less than a maximum width of the target container.

In an example, the transmission device is a belt transmission device.

A goods picking method includes:
transferring, by a transferring system, a target container from a container storage area to a first transport line;
transporting, by the first transport line, the target container to a picking area corresponding to a picking device;
picking, by the picking device, order goods from the target container based on order information;
transporting the target container, for which picking is finished, from the first transport line to a second transport line; and
transferring, by the transferring system, the target container from the second transport line to the container storage area;
where the first transport line and the second transport line are arranged in parallel.

In an example, the transferring system includes a transferring device and a fetching device, or the transferring system includes a transferring device.

In an example, the process of transferring, by a transferring system, a target container from a container storage area to a first transport line, includes:
transferring, by the transferring device, the target container from the container storage area to a position where the fetching device is located; and
fetching, by the fetching device arranged at a second end of the first transport line, the target container from the container carrier and place the target container onto the first transport line;
the process of transferring, by the transferring system, the target container from the second transport line to the container storage area, includes:
   fetching, by the fetching device, the target container from the second transport line and place the target container on the container carrier; and
   transferring, by the transferring device, the container carrier from the location where the fetching device is located to the container storage area.

In an example, the process of transferring, by a transferring system, a target container from a container storage area to a first transport line, includes:
transferring, by the transferring device, the container carrier accommodating the target container from the container storage area to a first position; and
fetching, by a fetching device arranged at the first position, the target container from the container carrier, transfer and place the target container onto the first transport line;
the process of transferring, by the transferring system, the target container from the second transport line to the container storage area, includes:
   fetching, by the fetching device, the target container from the second transport line, transfer and place the target container on the container carrier.

In an example, the process of transferring, by a transferring system, a target container from a container storage area to a first transport line, includes:
transferring, by a transferring device, the target container from the container storage area and placing the target container onto the first transport line,
the process of transferring, by the transferring system, the target container from the second transport line to the container storage area, includes:
   fetching, by the transferring device, the target container from the second transport line, transfer and place the target container back to the container storage area.

### BRIEF DESCRIPTION OF THE DRAWINGS

FIG. 1 is a side view of a goods picking system provided by an example of the disclosure;
FIG. 2 is a top view of a goods picking system provided by an example of the disclosure;
FIG. 3 is a schematic structural diagram of a shelf provided by an example of the disclosure;
FIG. 4 is a schematic structural diagram of a self-driven robot provided by an example of the disclosure;
FIG. 5 is a side view of another goods picking system provided by an example of the disclosure; and
FIG. 6 is a top view of another goods picking system provided by an example of the disclosure.

Reference numbers in the drawings:
1-transferring device; 2-transmission device; 21- first transport line; 22- second transport line; 23-lifting platform; 3-fetching device; 31-mechanical arm; 32- gripper; 4- target container; 5-picking device; 6- image capture device;
131-shelf; 136-goods; 1361-two-dimensional code; 1363-support column;
110-self-driven robot; 1101-drive mechanism; 1102-hoist mechanism; 1103-camera

### DESCRIPTION OF EMBODIMENTS

The disclosure will be described below with reference to the drawings and examples. It can be understood that the specific embodiments described here are only used to explain the disclosure, but not to limit the disclosure. It should be further noted that for convenience of description, the drawings only show parts of the structure related to the disclosure, but not all of the structures.

In the description of the disclosure, unless expressly specified and defined, the terms "connected", "connecting", and "fixed" shall be understood in a broad sense, for example, there can be a fixed connection, a detachable connection, or an integration; there can be a mechanical connection or an electrical connection; there can be a direct connection or an indirect connection through an intermediate medium; and it can be the internal communication between two elements or the interaction between two elements. For those of ordinary skills in the art, the specific meaning of the above-mentioned terms in the disclosure can be understood under specific circumstances.

In the description of the examples, the terms "upper", "lower", "left", "right" and other orientations or positional relationships are based on the orientations or positional relationships shown in the drawings, and are only for convenience of description and for simplification of operations. These terms do not indicate or imply that the referenced devices or elements must have a specific orientation, be constructed and operated in a specific orientation, and therefore cannot be understood as a limitation to the disclosure. In addition, the terms "first" and "second" are used to distinguish in description without any special meanings.

### Example 1

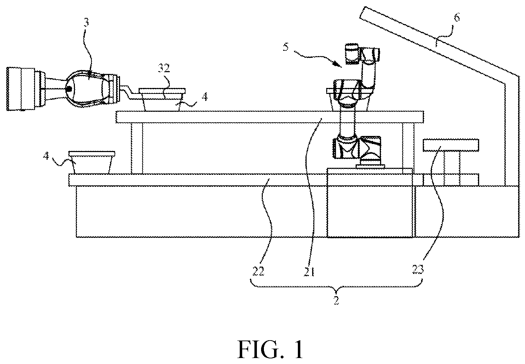

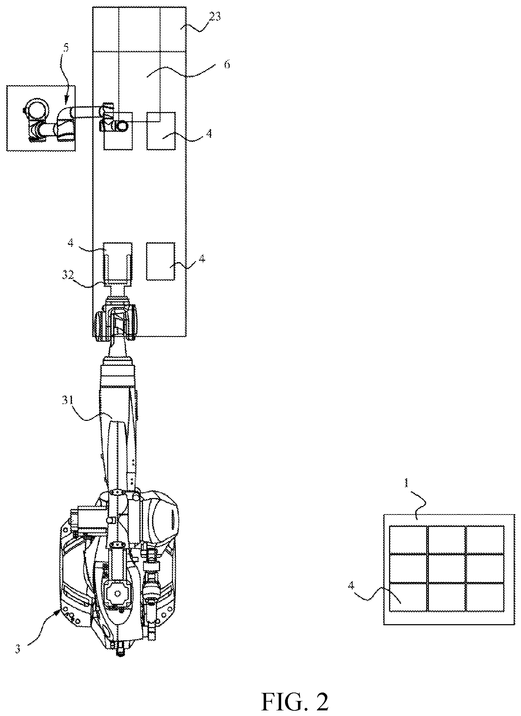

Fig. 1 is a side view of a goods picking system provided by an example of the disclosure, and Fig. 2 is a top view of a goods picking system provided by an example of the disclosure. As shown in Figs. 1 and 2, an example of the disclosure provides a goods picking system configured to realize automatic picking of order goods from storage containers to order boxes, thereby improving efficiency and accuracy of picking.

The goods picking system provided by this example includes: a transmission device 2, including a first transport line 21 and a second transport line 22 arranged in parallel; a transferring system configured for transferring a target container 4 having order goods stored from a container storage area to the first transport line 21 and for transferring the target container 4 from the second transport line 22 to the container storage area; a picking device 5 provided at a first end of the first transport line 21, configured for picking goods from the target container 4 according to order information; a detecting system configured for detecting operational status of multiple devices or components and environmental status; and a control system connected with the detecting system, configured for adjusting and controlling operations of the multiple devices or components.

The goods picking system provided in this example can realize the automatic picking of order goods from the container storage area to the order box by the transferring system, the transmission device 2, and the picking device 5: the target container 4 located in the container storage area is transferred by the transferring system to the first transport line 21, and then the first transport line 21 operates and conveys the target container 4 to the picking device 5, so that the picking device 5 performs picking on the order goods in the target container 4 according to the order information and puts the goods into the order box. The automated process of goods fetching, conveying and picking improves the efficiency in picking the order goods, reduces the labor intensity of the staff and errors in order picking caused by operation errors or fatigue operations of the staff, and improves the accuracy of the picking; through the second transport line 22, the target container 4 subjected to goods picking is transported from a back end of the second transport line 22 to the front end, for example, from the first end of the second transport line to the second end of the second transport line. The transferring system transfers the target container 4 on the second transport line 22 back to the container storage area, waiting for subsequent operations. This further improves the management and nattiness of containers by the warehouse, avoids the confusion in subsequent picking and warehouse management caused by the improper placement of the target container 4 after picking, and improves the management efficiency of the goods picking system and the warehousing logistics system.

In this example, the transferring system includes a transferring device 1, and the transferring device 1 is configured to transfer the target container 4 or a carrying container accommodating the target container 4 to a first position, or directly transfers the target container 4 onto the first transport line21.

In this example, the transferring device 1 may be a self-driven robot, and the target transferred by the transferring device 1 may be the target container 4 or a container carrier holding the target container 4. In an embodiment, the container carrier may be a carrier structure capable of holding the target container 4, such as a movable shelf, a pallet, a cage, a bin, or the like.

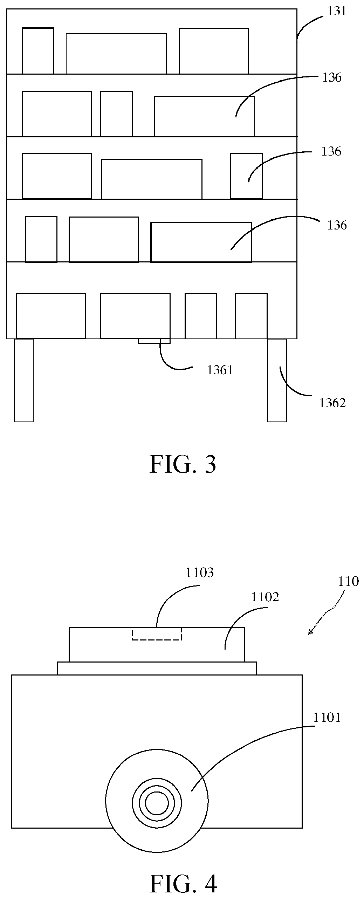

The case that the transferring device 1 aims to transfer a movable shelf is taken as an example. Fig. 3 is a schematic structural diagram of a shelf provided in an embodiment of the disclosure. As shown in Fig. 3, the shelf 131 includes multiple compartments and four floor support columns 1362. A variety of goods 136 can be placed directly on the compartments of the shelf 131, or the goods 136 can be placed inside the shelf 131 or on an outer surface of the shelf 131 in any suitable manner such as via hooks or rods in or on the shelf 131. The compartments of the shelf 131 can also be provided with multiple bins, which can be separated from the shelf 131, or can be integrated with the shelf 131. One or more pieces of goods can be placed in the bin.

In one example, the shelf 131 may be a shelf with openings at two directions. Two pieces of goods 136 can be placed along a depth direction of the compartment, that is, one piece of goods 136 can be placed in each opening direction. Or two bins can be placed along the depth direction of the compartment, that is, one bin is placed in each opening direction. Alternatively, the shelf can be a shelf with opening at one direction. One piece of goods can be placed along the depth of the compartment, that is, only one piece of goods 136 is placed in the opening direction; or one bin is placed along the depth of the compartment, that is, only one bin is provided in the opening direction.

In this example, the transferring device 1 transfers the shelf 131 in a jacking-up manner. FIG. 4 is a schematic structural diagram of a self-driven robot provided in an embodiment of the disclosure. As shown in FIG. 4, the self-driven robot 110 may include a drive mechanism 1101 by which the self-driven robot 110 can move in a working space. The self-driven robot 110 may further include a hoist mechanism 1102 configured to transfer shelves. The self-driven robot 110 travels along clear spaces in the array of the shelves; after arriving underneath the shelf 131, the self-driven robot 110 raises the shelf 131 through the hoist mechanism 1102 such that the support columns 1362 of the shelf 131 leave the ground and the whole shelf 131 is lift from the ground, so as to transfer the shelf 131 to a target position. When the hoist mechanism 1102 is lowered, the shelf 131 is placed on the ground, and the self-driven robot 110 moves out from the underneath of the shelf by means of the drive mechanism 1101 to realize the separation of the shelf 131 from the self-driven robot 110.

In one example, the transfer of the shelf 131 may alternatively in a submerged manner, and a docking device is provided at a bottom of the shelf 131 or a top of the self-driven robot 110 to realize docking between the shelf 131 and the self-driven robot 110. The self-driven robot 110 travels along clear spaces in the array of the shelves to the underneath of the shelf 131, realizes docking between the shelf 131 and the self-driven robot 110 via the docking device, and drags the shelf 131 to the target location.

In another example, the self-driven robot 110 may alternatively transfer the shelf 131 in a traction manner. The self-driven robot 110 is connected with the shelf 131 through a traction mechanism, and a motion of the self-driven robot 110 drags the shelf 131 to move. In other embodiments, the self-driven robot 110 can transfer the shelf 131 in other manners, and further listing is emitted in this embodiment.

In this example, the self-driven robot 110 further has an autonomous navigation function. Taking two-dimensional code navigation as an example of the autonomous navigation, the self-driven robot 110 further includes a navigation recognition component configured to recognize two-dimensional codes on the ground. The self-driven robot 110 further includes a downward-facing camera. The self-driven robot 110 can navigate forward according to the two-dimensional code information (or other ground markers) captured by the downward-facing camera, and can travel to the underneath of a target shelf 131 indicated by the control system according to a route determined by the control system. In other embodiments, in addition to two-dimensional code navigation, the self-driven robot 110 can alternatively use other navigation methods, such as inertial navigation, Simultaneous Localization and Mapping (SLAM) navigation, etc., and can combine two or more navigation methods, such as two-dimensional code navigation plus inertial navigation, SLAM navigation plus two-dimensional code navigation, etc.

In an example, the self-driven robot 110 further includes an upward-facing camera 1103. As shown in Figure 3, there is a two-dimensional code 1361 at a center of the bottom of the shelf 131. When the self-driven robot 110 travels to the underneath of the shelf 131, the two-dimensional code 1361 is correctly captured by the upward-facing camera to ensure that the self-driven robot 10 is located just below the shelf 131, so as to ensure that the self-driven robot 110 can lift and transfer the shelf 131 steadily.

The case that the transferring device 1 aims to transfer a bin is taken as an example. The bin can be placed on the compartment of the shelf, and one or more pieces of goods may be placed in the bin. In one example, the transferring device 1 may include a controller, a moving mechanism connected to the controller, a transport mechanism connected to the controller, and a grasper connected to both the controller and the transport mechanism. In this embodiment, the controller can control the movement of the moving mechanism so that the transferring device 1 moves to the shelf where the target bin is located, then control the transport mechanism to move up or down to drive the grasper on the transport mechanism to move to the compartment of the shelf where the target bin is located, and control the grasper to grasp the target bin on the compartment. After obtaining the target bin, the controller controls the moving mechanism to move to a first position or to the first transport line 21, so as to transfer the target bin to the first position or onto the first transport line 21. In an embodiment, the transferring device 1 further includes multiple storage spaces corresponding to the compartments of the shelf. After controlling the grasper to grasp the target bin, the controller can control the grasper to place the target bin into a corresponding storage space, and then control the moving mechanism to move to the first position or the first transport line 21, so as to transfer the target bin to the first position or onto the first transport line 21. In an embodiment, the grasper may be two gripping arms.

In another example, the transferring device 1 may be a commonly used six-axis or four-axis mechanical arm structure. The transferring device 1 includes a self-driven device, a moving mechanism, a mechanical arm, and a gripper. The gripper is provided at a front end of the mechanical arm. The self-driven device connects to the moving mechanism, the mechanical arm and the gripper, and controls the movement of the moving mechanism, the mechanical arm and the gripper, so as to realize the transferring of the target bin by the transferring device 1: the self-driven device can drive the moving mechanism to move, so that the transferring device 1 can move to the shelf where the target bin is located; the self-driven device can further drive multi-axis motion of the mechanical arm, so that the gripper at the front end of the mechanical arm can reach a predetermined position, for example, to the front or both sides of the target bin; and can drive the gripper to grasp the target bin. After the gripper grasps the target bin, the self-driven device drives the moving mechanism to move so to transport the target bin grasped by the gripper to the first position or onto the first transport line 21.

In one example, the grasper and the gripper have the same structure. For example, both the grasper and the gripper include two oppositely arranged gripping arms, and the two gripping arms are configured to clamp the bin for transfer.

In this example, the self-driven robot 110 further includes a control module that controls the entire self-driven robot 110 to realize functions such as movement and navigation.

In a case that the transferring device 1 aims to transfer a container carrier such as a shelf, a pallet, a cage, etc., the transfer system further includes a fetching device 3, and the fetching device 3 is configured to fetch the target container 4 from the container carrier on the transferring device 1. In this embodiment, the fetching device 3 may not have a self-moving function, that is, the fetching device 3 does not have an automatic moving function, and the fetching device 3 uses a movable mechanical arm to grasp target containers at different positions. In this case, the working process of the goods picking system is as follows: the control system dispatches the transferring device 1 according to received order information and a location where the container carrier containing the target container 4 is located in the warehouse; the transferring device 1 generates a navigation path according to the location, navigates to the location of the container carrier in the container storage area, and realizes docking between the transferring device 1 and the container carrier by jacking-up, traction or other means; the transferring device 1 transfers the container carrier to a location of the fetching device 3 , where the fetching device 3 is arranged at a second end of the first transport line 21, and the first transport line 21 is within a movement range of the mechanical arm of the fetching device 3; the fetching device 3 takes the target container 4 out of the container carrier and put the target container 4 on the first transport line 21; the first transport line 21 transports the target container 4 to a picking area corresponding to the picking device 5, and the picking device 5 picks out order goods from the target container 4; the target container 4 having finished with picking is transported to the second transport line 22; the fetching device 3 removes the target container 4 having finished with picking from the second transport line 22 and puts the target container 4 on the container carrier; the transmission device 1 transfers the container carrier back to the container storage area based on self-driving and self-navigation.

In another example, the fetching device 3 may further have a self-moving function, i.e., capable of transferring the target container 4 by free movement. At this time, the goods picking method corresponding to the goods picking system is as follows. The control system dispatches the transferring device 1 according to received order information and a location where the container carrier containing the target container 4 is located in the warehouse; the transferring device 1 generates a navigation path based on the location and navigates to the location of the container carrier in the container storage area, and realizes docking between the transferring device 1 and the container carrier by jacking-up, traction or other means; the transferring device 1 transfers the container carrier to a first position, where the first position can be any position in the warehouse system. In one embodiment, the first position is located near the transmission device 2. The fetching device 3 takes the target container 4 out from the container carrier and places the target container 4 on the first transport line 21; the first transport line 21 transports the target container 4 to a picking area corresponding to the picking device 5, and the picking device 5 picks the order goods out of the target container 4; the target container 4 having finished with picking is transported to the second transport line 22; the fetching device 3 removes the target container 4 having finished with picking from the second transport line 22 and transfers the target container 4 back to the container carrier at the first position; and the transmission device 1 transfers the container carrier back to the container storage area based on self-driving and self-navigation.

In another example, the target transferred by the transferring device 1 may alternatively be a target container. The transferring device 1 can be provided with a temporary storage shelf for temporarily storing the target container 4. After travelling to the container storage area, the transferring device 1 fetches the target container 4 from the container carrier (such as a shelf) and places the target container 4 on the temporary storage shelf of the transferring device 1, and travels to the first position or to a location of the fetching device 3; or after removing the target container 4 from the second transport line 22, moves back to the container storage area, and puts the target container on the temporary storage shelf back to a specific position of the container carrier such as the shelf. In this way, the transferring device 1 can transfer multiple target containers 4 at once, which may save transfer time and improve the transfer efficiency. Since the target container 4 is stored on the temporary storage shelf of the transferring device 1, the fetching device 3 is required to assist in taking out the target container 4 from the transferring device 1 and placing the target container 4 onto the first transport line 21, or taking out the target container 4 from the second transport line 22 and placing the target container 4 on the temporary storage shelf of the transferring device 1. At this time, the goods picking method corresponding to the goods picking system is as follows. The control system dispatches the transferring device 1 according to the received order information and the location information where the target container 4 is located in the warehouse; the transferring device 1 moves to the location of the target container 4, takes the target container 4 out of the container carrier in the container storage area and places the target container 4 onto its own temporary storage shelf; the transferring device 1 transfers the target container 4 to the first position or to a location of the fetching device 3. The fetching device 3 takes out the target container from the transferring device 1 and places the target container 4 on the first transport line 21, or places the target container 4 on the first transport line 2 after transferring; the target container 4 having finished with picking is transported to the second transport line 22; the fetching device 3 removes the target container 4 having finished with picking from the second transport line 22 and places the target container 4 on the temporary storage shelf of the transferring device 1, or places the target container 4 on the temporary storage shelf of the transferring device 1 after transferring. After travelling to the location of the container storage area where the target container 4 is located, the transferring device 1 takes the target container 4 from the temporary storage shelf and places the target container 4 on the container carrier in the container storage area.

In another example, the target transferred by the transferring device 1 can be the target container 4, and each time after the transferring device 1 transfers a target container 4 in the container storage area by grasping, clamping, and the like, the transferring device 1 moves to the location of the transmission device 2 via self-driving and self-navigation, places the transferred target container 4 at the first position or directly places the target container 4 on the first transport line 21, and grasps the target container 4 on the second transport line 22 after the target container 4 has finished with picking and transfers the target container 4 back to the container storage area. In this way, the fetching device 3 can be omitted, and the storage of the target container 4 between the transmission device and the container storage area can be achieved with only the transferring device 1. However, because the transferring device 1 can only carry out reciprocating transfer of one target container at a time with low efficiency, multiple transferring devices 1 are required to work together. At this time, the picking method corresponding to the goods picking system is as follows. The control system dispatches the transferring devices 1 according to the received order information and the location information of the target containers 4 in the warehouse; the transferring devices 1 move to the locations of the target containers 4, take the target containers 4 out of the container carriers in the container storage area and transfer the target containers 4 to the first transport line 21; the first transport line 21 transports the target containers 4 to the picking area corresponding to the picking device 5, and the picking device 5 picks order goods from the target containers 4; the target containers 4 having finished with picking are transported to the second transport line 22; the transferring devices 1 take the target containers 4 out of the second transport line 22, transfer and put the target containers 4 back to the container carriers in the container storage area.

In this example, the container carrier used by the transferring device 1 for transferring the target container 4 from the container storage area to the fetching device 3 may be the same as or be different from the container carrier used for transferring the target container 4 from the fetching device 3 back to the container storage area. For example, when the transferring device 1 transfers the container carrier containing the target container 4 from the container storage area to the location of the fetching device 3, the transferring device 1 can wait in place until the fetching device 3 places the target container 4 in the container carrier. For another example, after the transferring device 1 transfers the container carrier containing the target container 4 from the container storage area to the location of the fetching device 3, the container carrier can be transferred back to the container storage area; and after the picking for the target container 4 is finished, the transferring device 1 transfers another container carrier from the container storage area to the position of the fetching device 3 according to an instruction of the inventory control system.

In this example, an immovable fetching device 3 is taken as an example. The fetching device 3 can be a six-axis or four-axis industrial mechanical arm structure commonly used in the art. The fetching device 3 includes a self-driven device, a mechanical arm 31 and a gripper 32. The gripper 32 is arranged at a front end of the mechanical arm 31. The self-driven device connects to the mechanical arm 31 and the gripper 32, and controls the movement of the mechanical arm 31 and the gripper 32 to realize the fetching and placing of the target container 4 by the fetching device 3: the self-driven device can drive the mechanical arm 31 to perform a multi-axis motion, so that the gripper 32 at the front end of the mechanical arm 31 can reach a predetermined position, such as the front or both sides of the target container 4; can drive the gripper 32 to grasp the target container 4; and then can continue to drive the mechanical arm 31 to move, so as to transport the target container 4 grasped by the gripper 32 to a corresponding position.

In this example, the gripper 32 includes two gripping arms arranged oppositely, and the two gripping arms are configured to clamp the target container 4 for transferring. The two gripping arms are arranged in parallel, and the two gripping arms can be arranged in a fixed structure or in a structure with adjustable spacing. When two gripping arms are used to transfer the target container 4, the two gripping arms respectively extend to the two sides of the target container 4 to grip the target container 4.

In order to facilitate the gripping of the target container 4 by the gripping arms, the width of the container increases from bottom to top, and the distance between the two gripping arms is greater than the minimum width of the container and is less than the maximum width of the container, so that the two gripping arms can extend from the lower end of the target container 4 to the two sides of the target container 4 to grip the target container 4. In addition, the target container 4 can be further provided with a flange protruding outward at an outer peripheral side wall or on an upper edge, and a cooperation of the flange and the gripping arms is used to realize the gripping of the target container 4 by the gripping arms, which improves the stability of gripping.

In other examples, the gripper 32 can be arranged according to actual situation, for example, can be a suction cup, a mechanical claw tray, and so on.

In this example, at least one of the gripping arms is provided with a pressure sensor on an inner side, which is configured to detect a pressure applied by the target container 4 to the gripping arm, so as to determine whether there are goods in the target container 4.

After the transferring device 1 places the target container 4 on the transmission device 2, the target container 4 is transported to a location of the picking device 5 by the first transport line 21. In this embodiment, the first transport line 21 and the second transport line 22 are arranged at higher and lower layers respectively, and the first transport line 21 is arranged in parallel to the second transport line 22 and spaced above the second transport line 22, with a lifting platform 23 being connected to tail ends of the first transport line 21 and the second transport line 22. Through the lifting action of the lifting platform 23, the target container 4 on the first transport line 21 can be transported to the second transport line 22, and the footprint of the transmission device 2 can be reduced.

In other examples, the first transport line 21 and the second transport line 22 can be alternatively arranged in parallel and spaced apart along the horizontal direction. At this time, the tail end of the first transport line 21 such as the first end of the first transport line and the tail end of the second transport line 22 such as the first end of the second transport line are connected by an arc-shaped transport line. That is, the entire transmission device transmission device2 is a U-shaped transport line. Alternatively, in other embodiments, the device connecting the tail end of the first transport line 21 and the tail end of the second transport line 22 may be a mechanical arm, that is, the mechanical arm is used to transfer the target container 4 at the tail end of the first transport line 21 to the tail end of the second transport line 22, so as to realize the connection of the two transport lines.

In this example, when the lifting platform 23 is raised to be parallel to the first transport line 21, the target container 4 on the first transport line 21 is transported to the lifting platform 23 via the transport action of the first transport line 21. A third transport line is provided on the lifting platform 23. When the lifting platform 23 descends to be parallel to the second transport line 22, the target container 4 on the lifting platform 23 is transported to a back end of the second transport line 22 via the transport action of the third transport line, and then is transferred to a front end of the second transport line 22 via the second transport line 22.

In other examples, a transmission device on the lifting platform 23 for driving the target container 4 from the lifting platform 23 to the second transport line 22 can be alternatively in other structural forms, for example, a side of the lifting platform 23 far away from the second transport line 22 may be provided with a push plate, and the push plate is driven by a motor or hydraulic cylinder to move in a direction toward the second transport line 22, thereby pushing the target container 4 on the lifting platform 23 to the second transport line 22. The transmission structure on the lifting platform 23 is not limited in this example.

In this example, the first transport line 21, the second transport line 22, and the third transport line can be belt conveyor lines, roller conveyor lines, transport rollers, etc. The type and structure of the first transport line 21, the second transport line 22, and the second transport line are not limited in this embodiment, and any device capable of realizing horizontal transmission of the goods is applicable. In addition, the configuration of the transport line is conventional in the art and will not be specified in this example.

In this example, the picking area for picking order goods is arranged at the back end of the first transport line 21, and the picking device 5 is arranged near the picking area to pick the order goods in the target container 4 which has been transported to the picking area. The picking device 5 may be a commonly used manipulator, and the picking device 5 is a common robot structure in the art, which will not be described in detail in this example.

The detecting system includes an image capture device 6 arranged above the picking area. The image capture device 6 is configured to collect information about the goods in the target container 4 at the picking area. The goods information includes posture information of the order goods and at least one of the following: quantity information of the order goods and product information of the order goods. In an embodiment, the goods information includes the posture of the goods in the target container 4, the quantity of the goods, and the product information of the goods. The image capture device 6 may determine the posture of the goods, which can assist the picking device 5 in determining a track of the mechanical arm 31 of the picking device 5, so as to accurately grasp the order goods and avoid the inconvenience and missing in grasping in case of messy goods in the target container 4.

The image capture device 6 includes a camera module and an information transmission module. The control system is provided with a processing module and a recognition module. The camera module is configured to capture image information of contents within the target container 4 and transmits the image information to the control system via the information transmission module. The processing module and the recognition module in the control system process the image information and obtain the posture information and quantity information of the order goods from the image information. The recognition module is configured to recognize tag code information in the image information. The tag code refers to an electronic tag attached to an outer surface of the target container 4 or attached to an outer surface of the order goods and used to indicate product information of the order goods. The tag code can be an electronic tag code such as a two-dimensional code, a barcode, etc. The tag code stores a variety of information about the corresponding goods, such as product name, product production date, etc. The recognition module is a module corresponding to the type of the tag code and can identify the information within the tag code. Providing the tag code and the recognition module is convenient for the order management system to manage the order goods. The type of the tag code and the recognition module is not limited in this example.

In this example, the camera module includes a camera, and the camera is configured to collect image information and scan note code. In other embodiments, the image capture device 6 may include a camera and a code scanner. The camera may be configured to collect a posture and quantity data of the target container 4, and the code scanner may be configured to scan the note code and identify the information of the tag code.

The control system controls the picking operations of the picking device 5 according to the goods information collected by the image capture device 6, and controls, according to the order information, the picking device 5 to take out order goods with a quantity corresponding to ordered quantity from the target container 4.

In this example, when the picking device 5 picks the goods, the first transport line 21 remains in a stopped state. When the image capture device 6 detects that the target container 4 reaches the picking area, the control system controls the first transport line 21 to stop, and synchronously controls the picking device 5 to move and perform goods picking; when the detecting system detects that the picking device 5 has finished the goods picking and the lifting platform 23 is at a height of the first transport line 21, the first transport line 21 is driven to continue to operate so as to transport the target container 4 to the lifting platform 23; when the detecting system detects that the target container 4 moves to the lifting platform 23, the control system drives to detect that the lifting platform 23 descends to a height of the second transport line, and drives the second transport line 22 to operate, so as to transport the target container 4 at the back end of the second transport line 22 to the front end of the second transport line 22; after the detecting system detects that the target container 4 is transported to the front end of the second transport line 22, the control system controls the second transport line 22 to stop, and drives the fetching device 3 to put the target container 4 on the second transport line 22 to the transferring device 1.

In this example, the in-position detection performed for the target container 4 in the picking area, on the lifting platform 23 and/or reaching the front end of the second transport line 22 can be performed with in-position detection devices such as photoelectric sensors, or image capture devices such as cameras equipment.

In this example, two rows of target containers 4 can be placed on the first transport line 21 at the same time, and the two rows of target containers 4 arrive at the picking area synchronously. The picking device 5 performs picking on the order goods in respective target containers 4 sequentially according to the order information and the image information collected by the image capture device 6. After the picking is finished for two target containers 4, the control system controls the first transport line 21 to start and synchronously transport the two target containers 4 to the lifting platform 23, and the lifting platform 23 transports the two target containers 4 to the second transport line 22 synchronously. Placing two rows of target containers 4 on the first transport line 21 is beneficial to improve the picking efficiency. In other examples, three or more rows of target containers 4 can be placed on the first transport line 21 at the same time.

In this example, the picking device 5 is provided on one side of the picking area, that is, only one picking device 5 performs picking of the order goods. In other embodiments, picking devices 5 may be provided on both sides of the picking area to perform picking for two or more rows of target containers 4 separately.

In this example, the order goods in the two rows of target containers 4 may be order goods for a same order, or order goods for different orders.

The goods picking system further includes an order transferring device. The order transferring device is configured to transport the order goods to a predetermined location for subsequent processing. The order transferring device can directly transport a single piece of order goods, or can first put all the order goods for a same order into an order box and then transport the order box, which is beneficial for the automated and efficient operation from receiving the order to finishing the order.

In this example, the goods picking system can process one order at a time, or can process multiple orders at the same time. When multiple orders are processed at the same time, the control system summarizes types of order goods and quantities of respective types of order goods according to the order information of the multiple orders, and determines position of shelf where each piece of order goods is located and a position where the target container 4 containing the piece of order goods is located on the container carrier. After the transferring device 1 transfers the target container 4 or the shelf where the target container 4 is located to the first position, the fetching device 3 transfers the target container 4 from the transferring device 1 to the first transport line, and the target container 4 is transported to the picking area through the first transport line. In the picking area, the picking device 5 determines the order to which the order goods in the target container 4 belong based on the order information and the goods information identified by the image capture module. When there is only one order associated with the order goods, the picking device 5 picks the order goods into a corresponding order box. When there are multiple orders associated the order goods, the picking device 5 sequentially picks the order goods into the order boxes corresponding to the multiple orders in quantities corresponding to the orders.

In this example, the same fetching device 3 is used to transfer the target container 4 not only from the transferring device 1 to the transmission device 2 but also from the second transport line 22 to the transferring device 1. In other embodiments, two fetching devices 3 may be provided for respectively transferring the target container 4 from the transferring device 1 to the transmission device 2 and transferring the target container 4 from the second transport line 22 to the transferring device 1.

This example further provides a goods picking method applicable to the goods picking system, which includes the following steps.

Step S10: The transferring system autonomously navigates to a location of the target container or the container carrier according to the order information and the position in the container storage area where the target container 4 is located.

Step S20: the transferring system transfers the target container 4 from the container storage area to the first transport line 21.

This step can be performed in a way that the transferring system directly transfers the target container 4 from the container storage area to the first transport line 21, or in a way that the transferring device 1 transfers the target container 4 or the container carrier to the first position or a location of the fetching device 3 and then the fetching device 3 takes the target container out of the transferring device 1 and places it on the first transport line 21.

Step S30: The first transport line 21 transports the target container 4 to the picking area corresponding to the picking device 5.

Step S40: The picking device 5 picks the order goods out of the target container 4.

Step S50: The target container 4 having finished with picking is transported from the first transport line 21 to the second transport line 22.

Step S60: The transferring system takes the target container 4 from the second transport line 22 and puts the target container 4 back to the container storage area.

This step can be performed in a way that the transferring system directly takes the target container 4 from the second transport line 22 and puts it back to the container storage area, or in a way that the fetching device 3 takes the target container 4 from the second transport line 22 and places it on the transferring device 1 and then the transferring device 1 transfers the target container 4 or the container carrier to the container storage area.

The goods picking method provided in this embodiment can improve the efficiency and accuracy of goods picking, and improve the management efficiency and accuracy of the picking system.

### Example 2

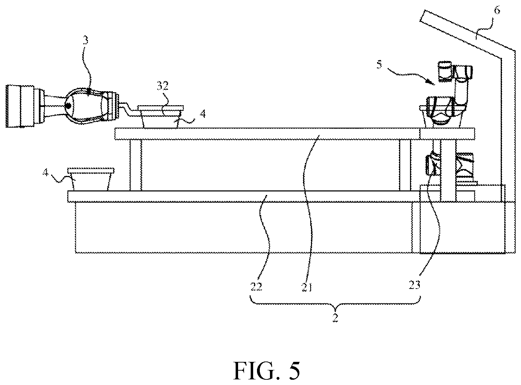

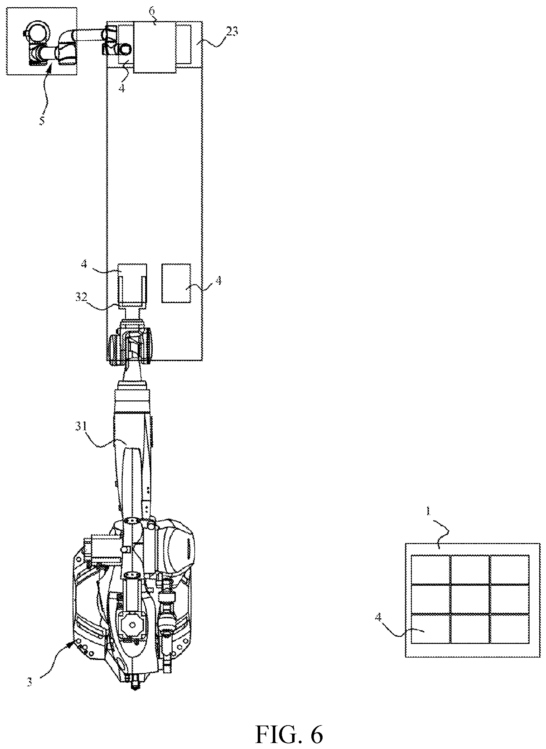

Fig. 5 is a structural side view of another goods picking system provided in an example of the disclosure, and Fig. 6 is a top view of another goods picking system provided in an example of the disclosure. As shown in Figs. 5 and 6, the goods picking system provided in this example is basically the same as the goods picking system provided in the example 1 for including the transferring device 1, the transmission device2, the fetching device 3, the picking device 5, the control system and the detecting system. The difference lies in the configuration of the picking device 5 and the controlling mechanism of the control system.

In this example, the picking area is arranged on the lifting platform 23, and the picking device 5 is arranged on one side of the lifting platform 23. By arranging the picking area on the lifting platform 23, the picking operation performed by the picking device 5 is separated from the operation of the first transport line 21, so that the first transport line 21 can maintain in a continuous operation state, thereby avoiding the increased overhead of the goods picking system and the failure of the first transport line 21 caused by stopping the first transport line 21 during picking and restarting the first transport line 21 after finishing the picking, and improving the service life of the goods picking system. At the same time, the continuous operation of the first transport line 21 can improve the picking efficiency of the goods picking system.

In order to prevent the target container 4 on the first transport line 21 from entering the lifting platform 23 when the picking device 5 is performing picking on the lifting platform 23 or when the lifting platform 23 is lower than the first transport line 21 and in turn affecting the picking on the lifting platform 23 or damaging the target container 4, a baffle is provided at the tail end of the first transport line 21, and a drive mechanism of the baffle is connected to the control system. Only when the lifting platform 23 is at the height of the first transport line 21 and there is no target container 4 on the lifting platform 23, the baffle is opened to connect the first transport line 21 and the lifting platform 23.

At the same time, a detection switch can be provided at the tail end of the first transport line 21, and the detection switch is connected to the control system. When the detection switch detects that the target container 4 presents at the tail end of the first transport line 21 and lasts for a duration longer than a preset duration, the control system controls the first transport line 21 to stop, so as to avoid the accumulation of the target containers 4 at the tail end of the first transport line 21. In one embodiment, the length of the preset duration depends on an operating frequency of the fetching device 3, a picking frequency of the picking device 5, a length of the first transport line 21, and a transport speed of the first transport line 21.

In this example, a temporary storage platform may be further provided at the front end of the second transport line 22, and the target container 4 transported from the second transport line 22 is conveyed to the temporary storage area and waits for the fetching of the fetching device 3. By providing the temporary storage platform, the second transport line 22 can be kept to operate continuously, and the picking efficiency of the goods picking system can be improved.

In this example, the temporary storage platform is provided with a neatening device, which is configured to neaten the target containers 4 entering the temporary storage platform, so that the target containers 4 are neatly arranged on the temporary storage platform in a posture. The neatening device may include two push plates arranged on both sides of the temporary storage platform. The drive mechanisms of the two push plates drive the two push plates to move in synchronization, thereby pushing and placing the target container 4 between the two push plates to a central position of the temporary storage platform, and keeping multiple target containers 4 on the temporary storage platform together, which is beneficial for the fetching device 3 to grasp the target containers 4.

This example further provides a goods picking method applicable to the goods picking system. For the goods picking method, reference may be made to the goods picking method in the embodiment 1, which will not be described in detail in this example.

## Claims

1. A goods picking system comprising:
a transmission device (2) comprising a first transport line (21) and a second transport line (22), wherein the first transport line (21) is configured to transport a target container (4), with order goods stored therein, to a picking device (5), and the target container (4) from which the order goods have been picked by the picking device (5) is transported to the second transport line;
a transferring system configured to transfer a target container (4) with order goods stored therein from a container storage area to the first transport line (21), and transfer the target container (4) from which the order goods have been picked, from the second transport line (22) to the container storage area, wherein the first transport line (21) and the second transport line (22) are arranged in parallel; and
the picking device (5), wherein the picking device (5) is configured to pick the order goods from the target container (4) according to order information; **characterized in that**:
the transferring system comprises a transferring device (1) and a fetching device (3),
the transferring device (1) is configured to transfer a container carrier accommodating the target container (4) between the container storage area and a position where the fetching device (3) is located; and the fetching device (3) is configured to fetch the target container (4) with order goods stored therein from the container carrier and place the target container (4) onto the first transport line (21), and fetch the target container (4) from which the order goods have been picked from the second transport line (22) and place the target container (4) onto the container carrier; or
the transferring device (1) configured to transfer a container carrier accommodating the target container (4) between the container storage area and a first position; and the fetching device (3) arranged at the first position, wherein the fetching device (3) is configured to fetch the target container (4) with order goods stored therein from the container carrier, transfer and place the target container (4) onto the first transport line (21), fetch the target container (4) from which the order goods have been picked from the second transport line (22), transfer the target container (4) to the first position and place the target container (4) on the container carrier;
wherein the fetching device (3) at least comprises a self-driven device, a mechanical arm (31) and a gripper (32), the mechanical arm (31) is connected with the self-driven device, and the gripper (32) is arranged at a tail end of the mechanical arm (31).

2. The goods picking system according to claim 1, wherein the transferring system comprises:
a transferring device (1) configured to transfer the target container (4) from the container storage area and place the target container (4) with order goods stored therein onto the first transport line (21), and fetch the target container (4) from which the order goods have been picked from the second transport line (22), and transfer and place the target container (4) back to the container storage area.

3. The goods picking system according to any one of claim 1 or 2, wherein the first transport line (21) is arranged above the second transport line (22), and a lifting platform (23) is provided at same ends of the first transport line (21) and the second transport line (22).

4. The goods picking system according to claim 3, wherein the lifting platform (23) is provided with a third transport line, the third transport line is configured to realize transport of the target container (4) from the first transport line (21) to the second transport line (22) through the third transport line on the lifting platform (23).

5. The goods picking system according to claim 1, wherein the gripper (32) comprises two gripping arms arranged oppositely, and the two gripping arms are configured to clamp the target container for transferring.

6. The goods picking system according to claim 5, wherein each of the gripping arms arranged oppositely is provided with a sensor configured for detecting whether the target container (4) is present between the two gripping arms arranged oppositely.

7. The goods picking system according to any one of claims 1 or 2, wherein the first transport line (21) or the second transport line (22) is in at least one of following forms: a belt conveyor line, a roller conveyor line, or a transport roller.

8. The goods picking system according to claim **1,** wherein the first transport line (21) and the second transport line (22) are arranged in parallel and spaced apart along a horizontal direction, and a tail end of the first transport line (21) is connected to a tail end of the second transport line (22) through an arc-shaped transport line, so that the first transport line (21), the arc-shaped transport line and the second transport line (22) form a U-shaped structure to realize transport of the target container (4) from the first transport line (21) through the arc-shaped transport line to the second transport line (22).

9. A goods picking method comprising:
transferring, by a transferring system, a target container (4) , with order goods stored therein, from a container storage area to a first transport line (21);
transporting, by the first transport line (21), the target container (4) , with order goods stored therein, to a picking device (5);
picking, by the picking device (5), order goods from the target container (4) based on order information;
transporting the target container (4), from which the order goods have been picked, to a second transport line (22); and
transferring, by the transferring system, the target container (4) from which the order goods have been picked, from the second transport line (22) to the container storage area, wherein the first transport line (21) and the second transport line (22) are arranged in parallel;
the transferring system comprises a transferring device (1) and a fetching device (3), **characterized in that** the fetching device (3) at least comprises a self-driven device, a mechanical arm (31) and a gripper (32), the mechanical arm (31) is connected with the self-driven device, and the gripper (32) is arranged at a tail end of the mechanical arm (31);
the process of transferring, by the transferring system, the target container (4) with order goods stored therein from the container storage area to the first transport line (21) comprises:
transferring, by the transferring device (1), the target container (4) with order goods stored therein from the container storage area to a position where the fetching device (3) is located; and fetching, by the fetching device (3), the target container (4) from the container carrier and place the target container (4) onto the first transport line (21); and the process of transferring, by the transferring system, the target container (4) from which the order goods have been picked, from the second transport line (22) to the container storage area, comprises: fetching, by the fetching device (3), the target container (4) from which the order goods have been picked, from the second transport line (22) and place the target container (4) on the container carrier; and transferring, by the transferring device (1), the container carrier from the location where the fetching device (3) is located to the container storage area; or
the process of transferring, by the transferring system, the target container (4) with order goods stored therein from the container storage area to the first transport line (21), comprises: transferring, by the transferring device (1), a container carrier accommodating the target container (4) from the container storage area to a first position; and fetching, by a fetching device (3) arranged at the first position, the target container (4) from the container carrier, transfer and place the target container (4) onto the first transport line (21); the process of transferring, by the transferring system, the target container (4) from which the order goods have been picked, from the second transport line (22) to the container storage area, comprises: fetching, by the fetching device (3), the target container (4) from which the order goods have been picked, from the second transport line (22), transfer the target container (4) to the first position and place the target container (4) on the container carrier; and transferring, by the transferring device (1), the container carrier from the position where the fetching device (3) is located to the container storage area.

10. The goods picking method according to claim 9, wherein the transferring system comprises a transferring device (1),
the process of transferring, by the transferring system, the target container (4) with order goods stored therein from the container storage area to the first transport line (21), comprises:
transferring and placing, by the transferring device (1), the target container (4) with order goods stored therein from the container storage area to the first transport line (21); and
the process of transferring, by the transferring system, the target container (4) from which the order goods have been picked, from the second transport line (22) to the container storage area, comprises:
fetching, by the transferring device (1), the target container (4) from which the order goods have been picked, from the second transport line (22), transferring and placing the target container (4) back to the container storage area.

## Patentansprüche

1. Warenkommissionierungssystem, umfassend:
eine Übertragungsvorrichtung (2), umfassend eine erste Transportlinie (21) und eine zweite Transportlinie (22), wobei die erste Transportlinie (21) dazu konfiguriert ist, einen Zielbehälter (4) mit darin gelagerten Auftragswaren zu einer Kommissionierungsvorrichtung (5) zu transportieren, und der Zielbehälter (4), aus dem die Auftragswaren von der Kommissionierungsvorrichtung (5) kommissioniert wurden, zu der zweiten Transportlinie transportiert wird;
ein Transferiersystem, das dazu konfiguriert ist, einen Zielbehälter (4) mit darin gelagerten Auftragswaren von einem Behälterlagerbereich zu der ersten Transportlinie (21) zu transferieren, und den Zielbehälter (4), aus dem die Auftragswaren kommissioniert wurden, von der zweiten Transportlinie (22) zu dem Behälterlagerbereich zu transferieren, wobei die erste Transportlinie (21) und die zweite Transportlinie (22) parallel angeordnet sind; und
die Kommissionierungsvorrichtung (5), wobei die Kommissionierungsvorrichtung (5) dazu konfiguriert ist, die Auftragswaren aus dem Zielbehälter (4) gemäß Auftragsinformationen zu kommissionieren; **gekennzeichnet dadurch, dass**:
das Transferiersystem eine Transferiervorrichtung (1) und eine Abholvorrichtung (3) umfasst,
die Transferiervorrichtung (1) dazu konfiguriert ist, einen Behälterträger, der den Zielbehälter (4) aufnimmt, zwischen dem Behälterlagerbereich und einer Position, wo sich die Abholvorrichtung (3) befindet, zu transferieren; und die Abholvorrichtung (3) dazu konfiguriert ist, den Zielbehälter (4) mit darin gelagerten Auftragswaren von dem Behälterträger abzuholen und den Zielbehälter (4) auf der ersten Transportlinie (21) zu platzieren, und den Zielbehälter (4), aus dem die Auftragswaren kommissioniert wurden, von der zweiten Transportlinie (22) abzuholen und den Zielbehälter (4) auf dem Behälterträger zu platzieren; oder die Transferiervorrichtung (1) dazu konfiguriert ist, einen Behälterträger, der den Zielbehälter (4) aufnimmt, zwischen dem Behälterlagerbereich und einer ersten Position zu transferieren; und die Abholvorrichtung (3) an der ersten Position angeordnet ist, wobei die Abholvorrichtung (3) dazu konfiguriert ist, den Zielbehälter (4) mit darin gelagerten Auftragswaren von dem Behälterträger abzuholen, den Zielbehälter (4) auf die erste Transportlinie (21) zu transferieren und zu platzieren, den Zielbehälter (4), aus dem die Auftragswaren kommissioniert wurden, von der zweiten Transportlinie (22) abzuholen, den Zielbehälter (4) zu der ersten Position zu transferieren und den Zielbehälter (4) auf dem Behälterträger zu platzieren,
wobei die Abholvorrichtung (3) mindestens eine selbstfahrende Vorrichtung, einen mechanischen Arm (31) und einen Greifer (32) umfasst, wobei der mechanische Arm (31) mit der selbstfahrenden Vorrichtung verbunden ist und der Greifer (32) an einem Endstück des mechanischen Arms (31) angeordnet ist.

2. Warenkommissionierungssystem gemäß Anspruch 1, wobei das Transferiersystem Folgendes umfasst:
eine Transferiervorrichtung (1), die dazu konfiguriert ist, den Zielbehälter (4) aus dem Behälterlagerbereich zu transferieren und den Zielbehälter (4) mit darin gelagerten Auftragswaren auf der ersten Transportlinie (21) zu platzieren, und den Zielbehälter (4), aus dem die Auftragswaren kommissioniert wurden, von der zweiten Transportlinie (22) abzuholen und den Zielbehälter (4) zurück zu dem Behälterlagerbereich zu transferieren und zu platzieren.

3. Warenkommissionierungssystem gemäß einem der Ansprüche 1 oder 2, wobei die erste Transportlinie (21) über der zweiten Transportlinie (22) angeordnet ist, und eine Hubplattform (23) an den gleichen Enden der ersten Transportlinie (21) und der zweiten Transportlinie (22) bereitgestellt ist.

4. Warenkommissionierungssystem gemäß Anspruch 3, wobei die Hubplattform (23) mit einer dritten Transportlinie versehen ist, wobei die dritte Transportlinie dazu konfiguriert ist, einen Transport des Zielbehälters (4) von der ersten Transportlinie (21) zu der zweiten Transportlinie (22) über die dritte Transportlinie (23) auf der Hubplattform durchzuführen.

5. Warenkommissionierungssystem gemäß Anspruch 1, wobei der Greifer (32) zwei gegenüber angeordnete Greifarme umfasst, und die zwei Greifarme dazu konfiguriert sind, den Zielbehälter zum Transferieren festzuklemmen.

6. Warenkommissionierungssystem gemäß Anspruch 5, wobei jeder der gegenüber angeordneten Greifarme mit einem Sensor versehen ist, der dazu konfiguriert ist, zu erkennen, ob der Zielbehälter (4) zwischen den zwei gegenüber angeordneten Greifarmen vorhanden ist.

7. Warenkommissionierungssystem gemäß einem der Ansprüche 1 oder 2, wobei die erste Transportlinie (21) oder die zweite Transportlinie (22) in mindestens einer der folgenden Formen vorliegt: eine Bandförderlinie, eine Walzenförderlinie oder eine Transportwalze.

8. Warenkommissionierungssystem gemäß Anspruch 1, wobei die erste Transportlinie (21) und die zweite Transportlinie (22) parallel angeordnet und entlang einer horizontalen Richtung voneinander beabstandet sind, und ein Endstück der ersten Transportlinie (21) mit einem Endstück der zweiten Transportlinie (22) über eine bogenförmige Transportlinie verbunden ist, sodass die erste Transportlinie (21), die bogenförmige Transportlinie und die zweite Transportlinie (22) eine U-förmige Struktur ausbilden, um einen Transport des Zielbehälters (4) von der ersten Transportlinie (21) über die bogenförmige Transportlinie zu der zweiten Transportlinie (22) durchzuführen.

9. Warenkommissionierungsverfahren, umfassend:
Transferieren, durch ein Transferiersystem, eines Zielbehälters (4) mit darin gelagerten Auftragswaren von einem Behälterlagerbereich zu einer ersten Transportlinie (21);
Transportieren, durch die erste Transportlinie (21), des Zielbehälters (4) mit darin gelagerten Auftragswaren, zu einer Kommissionierungsvorrichtung (5);
Kommissionieren, durch die Kommissionierungsvorrichtung (5), von Auftragswaren aus dem Zielbehälter (4) auf Basis von Auftragsinformationen;
Transportieren des Zielbehälters (4), aus dem die Auftragswaren kommissioniert wurden, zu einer zweiten Transportlinie (22); und
Transferieren, durch das Transferiersystem, des Zielbehälters (4), aus dem die Auftragswaren kommissioniert wurden, von der zweiten Transportlinie (22) zu dem Behälterlagerbereich, wobei die erste Transportlinie (21) und die zweite Transportlinie (22) parallel angeordnet sind;
wobei das Transferiersystem eine Transferiervorrichtung (1) und eine Abholvorrichtung (3) umfasst, **gekennzeichnet dadurch, dass** die Abholvorrichtung (3) mindestens eine selbstfahrende Vorrichtung, einen mechanischen Arm (31) und einen Greifer (32) umfasst, wobei der mechanische Arm (31) mit der selbstfahrenden Vorrichtung verbunden ist und der Greifer (32) an einem Endstück des mechanischen Arms (31) angeordnet ist;
wobei der Prozess des Transferierens, durch das Transferiersystem, des Zielbehälters (4) mit darin gelagerten Auftragswaren von dem Behälterlagerbereich zu der ersten Transportlinie (21) Folgendes umfasst:
Transferieren, durch die Transferiervorrichtung (1), des Zielbehälters (4) mit darin gelagerten Auftragswaren von dem Behälterlagerbereich zu einer Position, wo sich die Abholvorrichtung (3) befindet; und Abholen, durch die Abholvorrichtung (3), des Zielbehälters (4) von dem Behälterträger und Platzieren des Zielbehälters (4) auf der ersten Transportlinie (21); und wobei der Prozess des Transferierens, durch das Transferiersystem, des Zielbehälters (4), aus dem die Auftragswaren kommissioniert wurden, von der zweiten Transportlinie (22) zu dem Behälterlagerbereich Folgendes umfasst: Abholen, durch die Abholvorrichtung (3), des Zielbehälters (4), aus dem die Auftragswaren kommissioniert wurden, von der zweiten Transportlinie (22) und Platzieren des Zielbehälters (4) auf dem Behälterträger; und Transferieren, durch die Transferiervorrichtung (1), des Behälterträgers von dem Ort, wo sich die Abholvorrichtung (3) befindet, zu dem Behälterlagerbereich; oder
wobei der Prozess des Transferierens, durch das Transferiersystem, des Zielbehälters (4) mit darin gelagerten Auftragswaren von dem Behälterlagerbereich zu der ersten Transportlinie (21) Folgendes umfasst: Transferieren, durch die Transferiervorrichtung (1), eines Behälterträgers, der den Zielbehälter (4) aufnimmt, von dem Behälterlagerbereich zu einer ersten Position; und Abholen, durch eine Abholvorrichtung (3), die an der ersten Position angeordnet ist, des Zielbehälters (4) von dem Behälterträger, Transferieren und Platzieren des Zielbehälters (4) auf der ersten Transportlinie (21); wobei der Prozess des Transferierens, durch das Transferiersystem, des Zielbehälters(4), aus dem die Auftragswaren kommissioniert wurden, von der zweiten Transportlinie (22) zu dem Behälterlagerbereich Folgendes umfasst: Abholen, durch die Abholvorrichtung (3), des Zielbehälters (4), aus dem die Auftragswaren kommissioniert wurden, von der zweiten Transportlinie (22), Transferieren des Zielbehälters (4) zu der ersten Position und Platzieren des Zielbehälters (4) auf dem Behälterträger; und Transferieren, durch die Transferiervorrichtung (1), des Behälterträgers von der Position, wo sich die Abholvorrichtung (3) befindet, zu dem Behälterlagerbereich.

10. Warenkommissionierungsverfahren gemäß Anspruch 9, wobei das Transferiersystem eine Transferiervorrichtung (1) umfasst,
wobei der Prozess des Transferierens, durch das Transferiersystem, des Zielbehälters (4) mit darin gelagerten Auftragswaren von dem Behälterlagerbereich zu der ersten Transportlinie (21) Folgendes umfasst:
Transferieren und Platzieren, durch die Transferiervorrichtung (1), des Zielbehälters (4) mit darin gelagerten Auftragswaren von dem Behälterlagerbereich zu der ersten Transportlinie (21); und
wobei der Prozess des Transferierens, durch das Transferiersystem, des Zielbehälters (4), aus dem die Auftragswaren kommissioniert wurden, von der zweiten Transportlinie (22) zu dem Behälterlagerbereich Folgendes umfasst:
Abholen, durch die Transferiervorrichtung (1), des Zielbehälters (4), aus dem die Auftragswaren kommissioniert wurden, von der zweiten Transportlinie (22), Transferieren und Platzieren des Zielbehälters (4) zurück zu dem Behälterlagerbereich.

## Revendications

1. Système de prélèvement de marchandises comprenant :
un dispositif de transmission (2) comprenant une première ligne de transport (21) et une deuxième ligne de transport (22), dans lequel la première ligne de transport (21) est configurée pour transporter un conteneur cible (4), avec les marchandises commandées qu'il contient, vers un dispositif de prélèvement (5), et le conteneur cible (4) duquel les marchandises commandées ont été prélevées par le dispositif de prélèvement (5) est transporté vers la deuxième ligne de transport ;
un système de transfert configuré pour transférer un conteneur cible (4) avec les marchandises commandées qu'il contient d'une zone de stockage de conteneurs vers la première ligne de transport (21), et transférer le conteneur cible (4) duquel les marchandises commandées ont été prélevées, de la deuxième ligne de transport (22) vers la zone de stockage de conteneurs, dans lequel la première ligne de transport (21) et la deuxième ligne de transport (22) sont agencées en parallèle ; et
le dispositif de prélèvement (5), dans lequel le dispositif de prélèvement (5) est configuré pour prélever les marchandises commandées du conteneur cible (4) selon des informations de commande ; **caractérisé en ce que** :
le système de transfert comprend un dispositif de transfert (1) et un dispositif de récupération (3),
le dispositif de transfert (1) est configuré pour transférer un porte-conteneur logeant le conteneur cible (4) entre la zone de stockage de conteneurs et une position où se trouve le dispositif de récupération (3) ; et le dispositif de récupération (3) est configuré pour récupérer le conteneur cible (4) avec les marchandises commandées qu'il contient à partir du porte-conteneur et mettre en place le conteneur cible (4) sur la première ligne de transport (21), et récupérer le conteneur cible (4) duquel les marchandises commandées ont été prélevées à partir de la deuxième ligne de transport (22) et mettre en place le conteneur cible (4) sur le porte-conteneur ; ou
le dispositif de transfert (1) est configuré pour transférer un porte-conteneur logeant le conteneur cible (4) entre la zone de stockage de conteneurs et une première position ; et le dispositif de récupération (3) est agencé à la première position, dans lequel le dispositif de récupération (3) est configuré pour récupérer le conteneur cible (4), avec les marchandises commandées qu'il contient, à partir du porte-conteneur, transférer et mettre en place le conteneur cible (4) sur la première ligne de transport (21), récupérer le conteneur cible (4) duquel les marchandises commandées ont été prélevées à partir de la deuxième ligne de transport (22), transférer le conteneur cible (4) vers la première position et mettre en place le conteneur cible (4) sur le porte-conteneur ;
dans lequel le dispositif de récupération (3) comprend au moins un dispositif auto-entraîné, un bras mécanique (31) et une pince (32), le bras mécanique (31) est relié au dispositif auto-entraîné, et la pince (32) est agencée à une extrémité arrière du bras mécanique (31).

2. Système de prélèvement de marchandises selon la revendication 1, dans lequel le système de transfert comprend :
un dispositif de transfert (1) configuré pour transférer le conteneur cible (4) à partir de la zone de stockage de conteneurs et mettre en place le conteneur cible (4) avec les marchandises commandées qu'il contient sur la première ligne de transport (21), et récupérer le conteneur cible (4) duquel les marchandises commandées ont été prélevées à partir de la deuxième ligne de transport (22), et transférer et remettre en place le conteneur cible (4) dans la zone de stockage de conteneurs.

3. Système de prélèvement de marchandises selon l'une quelconque des revendications 1 ou 2, dans lequel la première ligne de transport (21) est agencée au-dessus de la deuxième ligne de transport (22), et une plate-forme élévatrice (23) est prévue aux mêmes extrémités de la première ligne de transport (21) et de la deuxième ligne de transport (22).

4. Système de prélèvement de marchandises selon la revendication 3, dans lequel la plate-forme élévatrice (23) est pourvue d'une troisième ligne de transport, la troisième ligne de transport est configurée pour réaliser le transport du conteneur cible (4) de la première ligne de transport (21) vers la deuxième ligne de transport (22) à travers la troisième ligne de transport sur la plate-forme élévatrice (23).

5. Système de prélèvement de marchandises selon la revendication 1, dans lequel la pince (32) comprend deux bras de préhension agencés à l'opposé, et les deux bras de préhension sont configurés pour serrer le conteneur cible pour le transfert.

6. Système de prélèvement de marchandises selon la revendication 5, dans lequel chacun des bras de préhension agencés à l'opposé est pourvu d'un capteur configuré pour détecter si le conteneur cible (4) est présent entre les deux bras de préhension agencés à l'opposé.

7. Système de prélèvement de marchandises selon l'une quelconque des revendications 1 ou 2, dans lequel la première ligne de transport (21) ou la deuxième ligne de transport (22) est sous au moins l'une des formes suivantes : une ligne de convoyeur à bande, une ligne de convoyeur à rouleaux ou un rouleau de transport.

8. Système de prélèvement de marchandises selon la revendication 1, dans lequel la première ligne de transport (21) et la deuxième ligne de transport (22) sont agencées en parallèle et espacées le long d'une direction horizontale, et une extrémité arrière de la première ligne de transport (21) est reliée à une extrémité arrière de la deuxième ligne de transport (22) par l'intermédiaire d'une ligne de transport en forme d'arc, de sorte que la première ligne de transport (21), la ligne de transport en forme d'arc et la deuxième ligne de transport (22) forment une structure en forme de U pour réaliser le transport du conteneur cible (4) de la première ligne de transport (21) à travers la ligne de transport en forme d'arc vers la deuxième ligne de transport (22).

9. Procédé de prélèvement de marchandises comprenant :
le transfert, par un système de transfert, d'un conteneur cible (4), avec les marchandises commandées qu'il contient, d'une zone de stockage de conteneurs vers une première ligne de transport (21) ;
le transport, par la première ligne de transport (21), du conteneur cible (4), avec les marchandises commandées qu'il contient, vers un dispositif de prélèvement (5) ;
le prélèvement, par le dispositif de prélèvement (5), des marchandises commandées à partir du conteneur cible (4) sur la base des informations de commande ;
le transport du conteneur cible (4), duquel les marchandises commandées ont été prélevées, vers une deuxième ligne de transport (22) ; et
le transfert, par le système de transfert, du conteneur cible (4) duquel les marchandises commandées ont été prélevées, de la deuxième ligne de transport (22) vers la zone de stockage de conteneurs, dans lequel la première ligne de transport (21) et la deuxième ligne de transport (22) sont agencées en parallèle ;
le système de transfert comprend un dispositif de transfert (1) et un dispositif de récupération (3), **caractérisé en ce que** le dispositif de récupération (3) comprend au moins un dispositif auto-entraîné, un bras mécanique (31) et une pince (32), le bras mécanique (31) est relié au dispositif auto-entraîné, et la pince (32) est agencée à une extrémité arrière du bras mécanique (31) ;
le processus de transfert, par le système de transfert, du conteneur cible (4), avec les marchandises commandées qu'il contient, de la zone de stockage de conteneurs vers la première ligne de transport (21) comprend :
le transfert, par le dispositif de transfert (1), du conteneur cible (4), avec les marchandises commandées qu'il contient, de la zone de stockage de conteneurs vers une position où se trouve le dispositif de récupération (3) ; et la récupération, par le dispositif de récupération (3), du conteneur cible (4) à partir du porte-conteneur et la mise en place du conteneur cible (4) sur la première ligne de transport (21); et le processus de transfert, par le système de transfert, du conteneur cible (4) duquel les marchandises commandées ont été prélevées, de la deuxième ligne de transport (22) vers la zone de stockage de conteneurs, comprend : la récupération, par le dispositif de récupération (3), du conteneur cible (4) duquel les marchandises commandées ont été prélevées, à partir de la deuxième ligne de transport (22) et la mise en place du conteneur cible (4) sur le porte-conteneur ; et le transfert, par le dispositif de transfert (1), du porte-conteneur de l'emplacement où se trouve le dispositif de récupération (3) vers la zone de stockage de conteneurs ; ou
le processus de transfert, par le système de transfert, du conteneur cible (4) avec les marchandises commandées qu'il contient, de la zone de stockage de conteneurs vers la première ligne de transport (21), comprend : le transfert, par le dispositif de transfert (1), d'un porte-conteneur logeant le conteneur cible (4) de la zone de stockage de conteneurs vers une première position ; et la récupération, par un dispositif de récupération (3) agencé à la première position, du conteneur cible (4) à partir du porte-conteneur, le transfert et la mise en place du conteneur cible (4) sur la première ligne de transport (21) ; le processus de transfert, par le système de transfert, du conteneur cible (4) duquel les marchandises commandées ont été prélevées, de la deuxième ligne de transport (22) vers la zone de stockage de conteneurs, comprend : la récupération, par le dispositif de récupération (3), du conteneur cible (4) duquel les marchandises commandées ont été prélevées, à partir de la deuxième ligne de transport (22), le transfert du conteneur cible (4) vers la première position et la mise en place du conteneur cible (4) sur le porte-conteneur ; et le transfert, par le dispositif de transfert (1), du porte-conteneur de la position où se trouve le dispositif de récupération (3) vers la zone de stockage des conteneurs.

10. Procédé de prélèvement de marchandises selon la revendication 9, dans lequel le système de transfert comprend un dispositif de transfert (1),
le processus de transfert, par le système de transfert, du conteneur cible (4), avec les marchandises commandées qu'il contient, de la zone de stockage de conteneurs vers la première ligne de transport (21), comprend :
le transfert et la mise en place, par le dispositif de transfert (1), du conteneur cible (4), avec les marchandises commandées qu'il contient, de la zone de stockage de conteneurs sur la première ligne de transport (21) ; et
le processus de transfert, par le système de transfert, du conteneur cible (4) duquel les marchandises commandées ont été prélevées, de la deuxième ligne de transport (22) vers la zone de stockage de conteneurs, comprend :
la récupération, par le dispositif de transfert (1), du conteneur cible (4) duquel les marchandises commandées ont été prélevées, à partir de la deuxième ligne de transport (22), le transfert et la remise en place du conteneur cible (4) dans la zone de stockage de conteneurs.
